(19) Europäisches Patentamt

European Patent Office

Office européen des brevets

(11) **EP 1 346 893 B1**

(12) **EUROPEAN PATENT SPECIFICATION**

(45) Date of publication and mention
of the grant of the patent:
**04.05.2005 Bulletin 2005/18**

(51) Int Cl.⁷: **B60T 11/16**, B62L 3/02,
B60T 7/10

(21) Application number: **03005701.2**

(22) Date of filing: **13.03.2003**

(54) **Hydraulic master cylinder for vehicle with bar handle**

Hauptbremszylinder für ein eine Lenkestange aufweisendes Fahrzeug

Cylindre de frein pour un véhicule muni d'un guidon

(84) Designated Contracting States:
**IT**

(30) Priority: **18.03.2002 JP 2002074282**

(43) Date of publication of application:
**24.09.2003 Bulletin 2003/39**

(73) Proprietor: **NISSIN KOGYO CO., LTD.**
**Ueda-shi, Nagano-ken (JP)**

(72) Inventor: **Hatakoshi, Genichi**
**Ueda-shi, Nagano-ken (JP)**

(74) Representative: **Buzzi, Franco**
**Buzzi, Notaro & Antonielli d'Oulx S.r.l.**
**Via Maria Vittoria 18**
**10123 Torino (IT)**

(56) References cited:
**WO-A-02/058988**          **US-A- 5 050 381**
**US-B1- 6 336 327**

EP 1 346 893 B1

**Description**

BACKGROUND OF THE INVENTION

1. Field of the invention

The present invention relates to a hydraulic master cylinder device for a vehicle having a bar handle (a vehicle with a handle bar), in which the brakes and the clutch are operated by a hydraulic pressure generated by a combination of a hydraulic master cylinder and an operation lever in a vehicle having a bar handle, such as a motorcycle, a tricycle, and a three- or four-wheel buggy vehicle. More particularly, the present invention relates to a vertically mounted hydraulic master cylinder device in which the cylinder is mounted in a state that the cylinder opening is directed to a front of the vehicle body

2. Description of the Related Art

A hydraulic master cylinder device for hydraulically operating the brakes and the clutch of the vehicle having the bar handle is disclosed in, for example, JP-UM-B-04-34157.

In the hydraulic master cylinder device, a cylinder body of the hydraulic master cylinder is mounted on a handle bar, while being oriented in a longitudinal direction of the vehicle body. The piston is inserted into a bottomed cylinder bore, which is formed in the cylinder body while being opened in the longitudinal direction of the cylinder body. A hydraulic chamber is defined by a bottom of the cylinder bore. An operation lever is pivotally supported, by a pivot, on a lever mounting part integral with the cylinder body. A push rod is interposed between an operation arm of the operation lever and the piston. The piston is pressed toward the bottom of the cylinder bore by the gripping operation of the operation lever. The working fluid that is pressurized in the hydraulic chamber is supplied to the brakes and the clutch.

In the grip operation of the operation lever, the following relation holds:

$$L1 \times F1 = L2 \times F2$$

wherein L1 : distance from a gripping point (force application point) P1 of the operation lever to the pivot as a rotational fulcrum of the operation lever
F1 : gripping force of the operation lever
L2 : distance from the pivot to a mounting part of the handle bar of the hydraulic master cylinder
F2 : reaction force acting on the handle bar mounting part of the hydraulic master cylinder.

In the hydraulic master cylinder device thus constructed, the handle bar mounting part of the system lies on and along the center axis of the cylinder, and the distance L2 from the pivot to the handle bar mounting part of the hydraulic master cylinder is short. Accordingly, the reaction force F2 acting on the handle bar mounting part is large. For this reason, in the gripping operation of the operation lever, an excessive moment acts on the cylinder body to thereby cause a flexural deformation in the cylinder body. As a result, lever operation feeling of less rigidity is unfavorably given to a rider.

US-B-6336327 discloses a master cylinder device for a vehicle having a master cylinder, with a cylinder body attached in the vicinity of a grip of a steering bar handle, and an operating lever which is supported on the cylinder body through a pivot and is pulled toward the grip to thereby push a piston of the master cylinder; the cylinder body is mounted in such a position that, below the axis of the bar handle, the axis of the cylinder body is substantially orthogonal to a vertical plane which includes the axis of the bar handle, whereby the master cylinder can be mounted even in a narrow space on the bar handle in a motorcycle and the like having a steering bar handle.

US-A-5050381 describes a master cylinder apparatus for a vehicle adapted to be attached to a bar steering handle. The apparatus comprises a master cylinder attached directly or via a bracket to the bar steering handle, an operating level pivoted on the bracket or a lever bracket of the master cylinder by means of a support shaft, an adjust bolt provided thrustable forward and backward to the operating lever, and a push rod having one end abutting on the rear end of a piston in the master cylinder and the other end pivoted on a free end of the adjust bolt. The forward/backward thrusting movement of the adjust bolt alters the distance between the support shaft and the point of action of the operating lever to the push rod, thereby changing the lever ratio of the operating lever to provide the operational feeling desired by a rider.

SUMMARY OF THE INVENTION

Accordingly, an object of the present invention is to provide a hydraulic master cylinder device for a vehicle having a bar handle, which is capable of, at low manufacturing cost, effectively suppressing a flexural deformation of the cylinder body caused by the lever operation, and provides a rigid lever operation feeling.

To achieve the above object, there is provided a hydraulic master cylinder for vehicle having a bar handle having a hydraulic master cylinder forming a cylinder bore opening toward a front part of a vehicle body and including a piston inserted into the cylinder bore, the hydraulic chamber being defined between the piston and a bottom of the cylinder bore and the hydraulic master cylinder being mounted on a handle bar of the vehicle so as to be oriented in a longitudinal direction of the vehicle body, and an operation lever for pressing the piston toward a bottom of the cylinder bore by gripping and operating the operation lever toward a grip provided on the handle bar, the operation lever being pivotally supported at a lever mounting part of the hydraulic master cylinder, wherein a handle bar mounting part of the hydraulic master cylinder is offset to a position closer to the grip than a center axis of the cylinder.

According to the above construction, it is preferable that the center axis of the cylinder is orthogonal to the handle bar.

According to the above construction, it is preferable that the hydraulic master cylinder for the vehicle having the bar handle further has a push rod disposed between the operation lever and the piston of the hydraulic master cylinder for transmitting a power.

BRIEF DESCRIPTION OF THE DRAWINGS

Fig. 1 is a front view showing a hydraulic master cylinder device showing an embodiment of the present invention; and
Fig. 2 is a cross sectional view taken on line II - II in Fig. 1.

DETAILED DESCRIPTION OF THE PREFERRED EMBODIMENTS

An embodiment of the present invention in which the present invention is incorporated into a front wheel brake of a vehicle having a bar handle, will be described with reference to the accompanying drawings. A hydraulic master cylinder device 1 is composed essentially of a hydraulic master cylinder 2 as a hydraulic pressure generating source, an operation lever 3 for operating the hydraulic master cylinder 2, and a push rod 4 for transmitting a power between the operation lever 3 and the hydraulic master cylinder 2. A bracket half body 5a formed integrally with a cylinder body 5 and a half split body bracket 6 separated from the former embraces a handle bar 7 at a front part of a vehicle body. Those brackets 5a and 6 are fastened by bolts 8 to thereby be mounted on a part of the handle bar 7, which is located closer to a front part of the vehicle body.

The hydraulic master cylinder 2 is of a verticallymounting type in which the cylinder body 5 is disposed in a longitudinal direction of the vehicle body, and the cylinder body 5 contains a bottomed cylinder bore 10 opening toward the front part of the vehicle body, and a center axis of the cylinder CL1 is orthogonal to the handle bar 7. A guide pin 12 is provided on a bottom wall of the bottomed cylinder bore 10 into which a piston 11 is inserted, while being protruded along the center axis of the cylinder CL1. An accommodating hole 11a for accommodating the guide pin 12 is formed in a front pat of the piston 11.

The piston 11 is inserted into the cylinder bore 10 in a state that the guide pin 12 is accommodated in the accommodating hole 11a. A hydraulic chamber 13 is defined between the piston 11 and a bottom of the cylinder bore 10. A return spring 14 is located, in a compressed fashion, between the bottomed cylinder bore 10 and the bottom wall of the accommodating hole 11a. The piston 11 is constantly urged toward an opening of the cylinder bore 10 by a resilient force of the return spring 14, and a backward limit of the piston when it is not operated is defined by a contact of the piston with the push rod 4.

In the cylinder body 5, the bracket half body 5a is extended to a rear part of the vehicle body, and a lever mounting part in the form of a couple of upper and lower lever brackets 5b that are protruded fromamiddle of the vehicle body at a position close to a front part of the vehicle body. A relief port 15 and a supply port 16 are formed in an upper wall 5c of the cylinder body 5, while communicating with the cylinder bore 10. A hose 18 is connected to a connection pipe 17, and a working fluid flows between a reservoir additionally provided (not shown) and the cylinder bore 10. The hydraulic chamber 13 is connected to the front wheel brakes (both are not illustrated) by use of brake hoses. The working fluid that is pressurized in the hydraulic chamber 13 is supplied to the front wheel brakes which in turn are hydraulically operated.

The push rod 4 has spherical heads 4a and 4b at both ends. The spherical end 4a is placed in a spherical recess 20 of the piston 11. The spherical end 4b is placed in a spherical recess 21 formed in an operation arm 3c of the operation lever 3. The push rod 4 is disposed as a whole on and along the center axis of the cylinder CL1.

The operation lever 3 includes a rotational base 3a mounted on the cylinder body 5, a grip operation part 3b extending from the rotational base 3a to and along a portion in front of an acceleration grip 22 (grip of the present invention), and the operation arm 3c for pushing the push rod 4 on the rear side of the vehicle body of the rotational base 3a. The rotational base 3a is inserted between the lever brackets 5b of the cylinder body 5, and a pivot 23 is inserted between them, whereby the operation lever 3 is rotatably mounted on the lever brackets 5b.

For the operation lever 3 thus mounted, the following relation holds

$$L1 \times F1 = L2 \times F2$$

wherein

F1 : gripping force applied to a gripping point (force application point) P1
L1 : distance from the gripping point P1 to the pivot 23 as a rotational fulcrum of the operation lever 3,
L2 : distance from the pivot 23 to a center P2 of the handle bar mounting part of the hydraulic master cylinder 2
F2 : reaction force acting on the mounting part center P2.

While the cylinder body 5 lies on and along the center axis of the cylinder CL1 orthogonal to the handle bar 7, the bracket half body 5a and the half split body bracket 6 combined with the former are disposed on a longitudinal direction line CL2 of the vehicle body, which is offset from the center axis of the cylinder CL1 to the acceleration grip 22, by a distance L3. Accordingly, a center P2 of a mounting part of the hydraulic master cylinder handle bar formed by the bracket half bodies 5a and 6 is also offset from the center axis of the cylinder CL1 to the longitudinal direction line CL2.

Accordingly, the distance L2 from the pivot 23 to the handle bar mounting part center P2 of the hydraulic master cylinder 2 is longer than the corresponding one in the conventional case by a distance corresponding to the offset since the handle bar mounting part center P2 is offset from the center axis of the cylinder CL1 to the acceleration grip 22 by a distance L3.

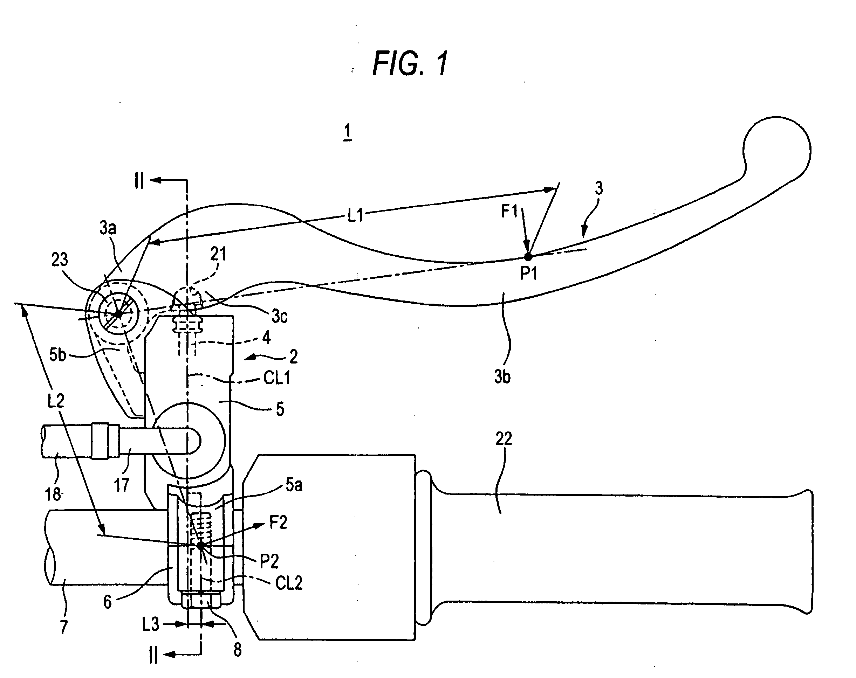

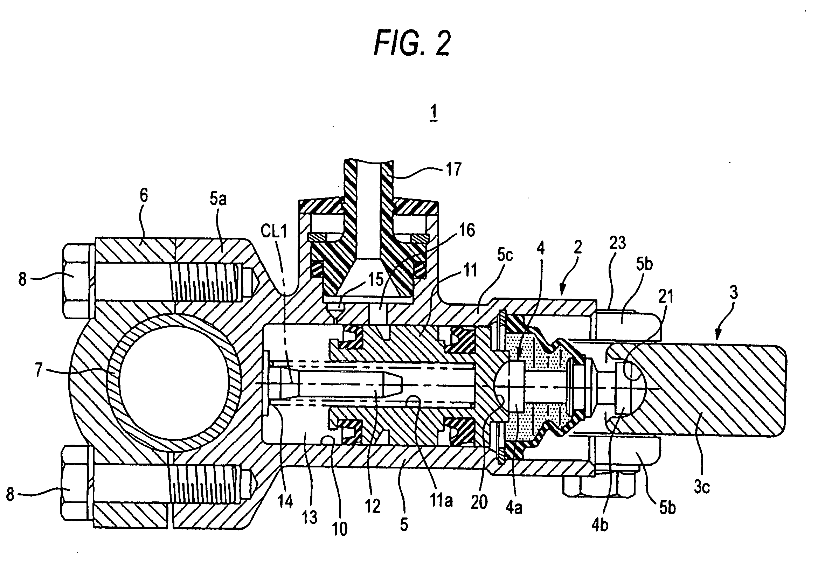

The hydraulic master cylinder device 1 for the vehicle having the bar handle of the instant embodiment is thus constructed. In a non-operation mode in which the operation lever 3 is not operated by gripping, the operation lever 3, the push rod 4 and the piston 11 are positioned at the backward limit, as shown in Figs. 1 and 2. When in the non-operation mode, the grip operation part 3b of the operation lever 3 is swung to the acceleration grip 22, the operation lever 3 is rotated about the pivot 23 to the handle bar 7, and the operation arm 3c of the operation lever 3 presses the push rod 4 toward the bottom of the cylinder bore 10. The tip of the piston closes the relief port 15 to shut off the communication between the cylinder bore 10 and the reservoir. Then, the working fluid in the hydraulic chamber 13 is gradually pressurized and the working fluid of a predetermined pressure is supplied to the front wheel brakes.

In gripping operation of the operation lever 3, as taught by the relation, L1 x F1 = L2 x F2, a moment of L1 x F1 acts clockwise in Fig. 1 from the operation lever 3. A moment L2 x F2 acts on the center P2 of the mounting part of the hydraulic master cylinder 2 counterclockwise in Fig. 1.

The hydraulic master cylinder 2 is mounted on the handle bar 7 in a state that the center P2 of the mounting part of the handle bar is offset from the center axis of the cylinder CL1 to the acceleration grip 22. The distance L2 from the pivot 23 to the center P2 of the handle bar mounting part of the hydraulic master cylinder 2 has an inversely proportional relationship with the reaction force F2. Therefore, the reaction force F2 acting on the center P2 of the handle bar mounting part is reduced by a force corresponding to the increase of the distance L2.

As a result, a flexural deformation acting on the cylinder body 5 by a braking operation is effectively suppressed to thereby secure a rigid operation feeling. Structurally, it is merely required to make a minor change of a mounting shape of the bracket half body 5a of the cylinder body 5. The hydraulic master cylinder device may be manufactured at low cost.

It will readily be understood that the hydraulic master cylinder of the present invention may be applied to the rear wheel brakes and clutch, in addition to the front wheel brakes.

As seen from the foregoing description, the mounting part of the hydraulic master cylinder to the handle bar is offset to a position closer to the grip than the center axis of the cylinder. A flexural deformation acting on the cylinder body by a braking operation is effectively suppressed, so that a rigid lever operation feeling is secured. To alternate the hydraulic master cylinder, it is merely required to make a minor change of a mounting shape of the bracket half body of the cylinder body. Accordingly, the hydraulic master cylinder device may be manufactured at extremely low cost.

**Claims**

1.  A hydraulic master cylinder for a vehicle having a handle bar (7) provided with a grip (22), comprising:

    a hydraulic master cylinder (2) forming a cylinder bore (10) and including a piston (11) inserted into the cylinder bore (10), a hydraulic chamber (13) being defined between the piston (11) and a bottom of the cylinder bore (10); and an operation lever (3) for pressing the piston (11) toward said bottom of the cylinder bore (10), the operation lever (3) being pivotally supported at a lever mounting part (5b) of the hydraulic master cylinder (2),

    wherein the hydraulic master cylinder (2) is designed to be mounted on the handle bar (7) of the vehicle so as to be oriented in a longitudinal direction of the vehicle body, with said cylinder bore (10) opening toward a front part of a vehicle body, and such that the piston (11) can be pressed toward said bottom of the cylinder bore (10) by gripping and operating the operation lever (3) toward said grip (22), **characterized in that** a handle bar mounting part (5a, 6) of the hydraulic master cylinder (2) is offset relative to a center axis (CL1) of the cylinder (2), so as that, in the mounted condition of the hydraulic master cylinder (2) on said handle bar (7), said handle bar mounting part (5a, 6) is offset to a position closer to said grip (22) than said center axis (CL1).

2.  The hydraulic master cylinder according to claim 1 wherein, in said mounted condition of the hydraulic master cylinder (2), said center axis (CL1) of the cylinder (2) is orthogonal to the handle bar (7).

3.  The hydraulic master cylinder according to claim 1 or 2, further comprising a push rod (4) disposed between the operation lever (3) and the piston (11) of the hydraulic master cylinder (2) for transmitting a power.

## Patentansprüche

1. Hydraulischer Hauptzylinder für ein Fahrzeug mit einer Griffstange (7), die mit einem Griff (22) versehen ist, umfassend:

   - einen hydraulischen Hauptzylinder (2), der eine Zylinderbohrung (10) bildet und einen Kolben (11) einschließt, der in der Zylinderbohrung (10) eingeführt ist,
   - eine hydraulische Kammer (13), die zwischen dem Kolben (11) und dem Boden der Zylinderbohrung (10) bestimmt ist; und
   - einen Betätigungshebel (3) zum Drücken des Kolbens (11) zu dem Boden der Zylinderbohrung (10), wobei der Betätigungshebel (3) an einem Hebelträgerteil (5b) des hydraulischen Hauptzylinders (2) schwenkbar gelagert ist,
   - wobei der hydraulische Hauptzylinder (2) ausgebildet ist, um auf der Griffstange (7) des Fahrzeugs angebracht zu werden, um in eine Längsrichtung des Fahrzeugkörpers ausgerichtet zu werden, wobei sich die Zylinderbohrung (10) zu einem Vorderteil eines Fahrzeugkörpers öffnet, und so dass der Kolben (11) mittels Greifen und Betätigen des Betätigungshebels (3) in Richtung des Griffs (22) zu dem Boden der Zylinderbohrung (10) gedruckt werden kann,

   **dadurch gekennzeichnet, dass** ein Griffstangenbefestigungsteil (5a, 6) des hydraulischen Hauptzylinders (2) relativ zu einer Mittelachse (CL1) des Zylinders (2) versetzt ist, so dass im befestigten Zustand des hydraulischen Hauptzylinders (2) auf der Griffstange (7) der Griffstangenbefestigungsteil (5a, 6) zu einer Position näher zu dem Griff (22) als zu der Mittelachse (CL1) versetzt ist.

2. Hydraulischer Hauptzylinder nach Anspruch 1, wobei in dem befestigten Zustand des hydraulischen Hauptzylinders (2) die Mittelachse (CL1) des Zylinders (2) orthogonal zu der Griffstange (7) ist.

3. Hydraulischer Hauptzylinder nach Anspruch 1 oder 2, weiter umfassend eine Schubstange (4), die zwischen dem Betätigungshebel (3) und dem Kolben (11) des hydraulischen Hauptzylinders (2) angeordnet ist, um eine Kraft zu übertragen.

## Revendications

1. Maître cylindre hydraulique pour un véhicule comprenant un guidon (7) muni d'une poignée (22), le maître cylindre comprenant :

   un maître cylindre hydraulique (2) formant un alésage de cylindre (10) et comprenant un piston (11) inséré à l'intérieur de l'alésage de cylindre (10), une chambre hydraulique (13) étant défini entre le piston (11) et une partie inférieure de l'alésage de cylindre (10) ; et
   un levier de fonctionnement (3) pour presser le piston (11) vers ladite partie inférieure de l'alésage de cylindre (10), le levier de fonctionnement (3) étant monté pivotant au niveau d'une pièce de montage de levier (5b) du maître cylindre hydraulique (2) ;

   dans lequel le maître cylindre hydraulique (2) est adapté pour être monté sur le guidon (7) du véhicule de manière à être orienté dans une direction longitudinale du corps du véhicule, ledit alésage de cylindre (10) débouchant vers une partie antérieure du corps d'un véhicule, et de telle sorte que le piston (11) puisse être pressé vers ladite partie inférieure de l'alésage de cylindre (10) en saisissant et en actionnant le levier de fonctionnement (3) vers ladite poignée (22) ;
   **caractérisé en ce qu'**une pièce de montage de guidon (5a, 6) du maître cylindre hydraulique (2) est déportée par rapport à un axe central (CL1) du maître cylindre (2), de sorte que, dans la condition montée du maître cylindre (2) sur ledit guidon (7), ladite pièce de montage de guidon (5a, 6) est déportée vers une position qui est plus proche de ladite poignée (22) que dudit axe central (CL1).

2. Maître cylindre hydraulique selon la revendication 1 dans lequel, dans ladite condition montée du maître cylindre hydraulique (2), ledit axe central (CL1) du cylindre (2) est orthogonal par rapport au guidon (7).

3. Maître cylindre hydraulique selon la revendication 1 ou 2, comprenant en outre une tige de poussée (4) qui est disposée entre le levier de fonctionnement (3) et le piston (11) du maître cylindre hydraulique (2) dans le but de transmettre une puissance.

FIG. 1

EP 1 346 893 B1

# FIG. 2